(19) **Europäisches Patentamt**

**European Patent Office**

**Office européen des brevets**

(11) **EP 0 921 292 B1**

(12) **EUROPÄISCHE PATENTSCHRIFT**

(45) Veröffentlichungstag und Bekanntmachung des Hinweises auf die Patenterteilung:
**10.09.2003 Patentblatt 2003/37**

(51) Int Cl.⁷: **F02C 6/00**, F02C 9/28

(21) Anmeldenummer: **97810953.6**

(22) Anmeldetag: **08.12.1997**

(54) **Verfahren zur Regelung einer Gasturbogruppe**

Method for controlling a gas turbine group

Procédé de régulation d'un groupe générateur à turbine à gaz

(84) Benannte Vertragsstaaten:
**DE FR GB**

(43) Veröffentlichungstag der Anmeldung:
**09.06.1999 Patentblatt 1999/23**

(73) Patentinhaber: **ALSTOM (Switzerland) Ltd**
**5401 Baden (CH)**

(72) Erfinder: **Frutschi, Hans Ulrich**
**5223 Riniken (CH)**

(56) Entgegenhaltungen:
**EP-A- 0 646 704**          **EP-A- 0 646 705**
**EP-A- 0 718 470**

**Beschreibung**

**Technisches Gebiet**

Die vorliegende Erfindung betrifft ein Verfahren zur Regelung einer Gasturbogruppe gemäss Oberbegriff des Anspruchs 1.

**Stand der Technik**

Aus EP-0 646 704 A1 ist ein Verfahren zur Regelung einer Gasturbogruppe bekanntgeworden. Diese Gasturbogruppe besteht im wesentlichen aus einer Verdichtereinheit, einer HD-Brennkammer, einer HD-Turbine, einer ND-Brennkammer, einer ND-Turbine und einem Generator. Die Bemessung der Brennstoffmenge für die HD-Brennkammer wird durch ein korrigiertes Temperatursignal bestimmt, das sich durch den Wert aus der Temperatur am Austritt der ND-Turbine vermindert durch den jeweiligen dort feststellbaren Temperaturanstieg zusammensetzt. Dieses Temperatursignal wird erfasst, indem der erzeugte Temperaturanstieg durch die in die ND-Brennkammer eingeführte Brennstoffmenge von der gemessenen Temperatur am Austritt der ND-Turbine in Abzug gebracht wird. Für die Bemessung der Brennstoffmenge für die ND-Brennkammer wird das unkorrigierte Temperatursignal am Austritt der ND-Turbine verwendet.

Bei diesem Verfahren wird die Erfassung der zur Regelung unabdingbaren Temperaturen an Orten vorgenommen, wo eine sichere technische Realisierung und Wiederholbarkeit gegeben ist. Dabei wird bei diesem Regelungskonzept davon ausgegangen, dass eine Temperaturerhöhung am Austritt der ND-Turbine, bedingt durch die Befeuerung der ND-Brennkammer, wiederholbar erfasst werden kann. Sonach lässt sich mit dieser Vorgehensweise ein Regelkonzept für die Brennstoffzumessung in die beiden Brennkammern erstellen.

Obschon mit diesem Regelkonzept eine gute Führung der Brennstoffzumessungen realisierbar ist, zeigt es sich immer wieder, dass plötzliche unvorgesehen auftretende Störungen, welche mittelbar oder unmittelbar auf die Prozesstemperaturen durchschlagen, infolge der immanenten Trägheiten eines solchen Systems, regelungstechnisch nicht situativ beherrscht werden können.

**Darstellung der Erfindung**

Hier will die Erfindung Abhilfe schaffen. Der Erfindung, wie sie in den Ansprüchen gekennzeichnet ist, liegt die Aufgabe zugrunde, bei einem Verfahren der eingangs genannten Art die Trägheiten bei der Erfassung von zur Regelung unabdingbaren Temperaturen auszuschalten.

*Erfindungsgemäss werden die Trägheiten im System dadurch ausgeschaltet, dass die reine temperaturabhängige Regelung der Brennstoffmengen durch einer druckabhängigen Eingriff ergänzt wird (Druckunterlagerung).*

Dabei wird die Brennstoffmenge für die Hochdruck-Brennkammer zunächst in Funktion des am Verdichteraustritt herrschenden Druckes geführt, wobei das Verhältnis zwischen dieser Brennstoffmenge und dem Verdichteraustrittsdruck durch einen die Abweichung der Eintrittstemperatur in die Hochdruckturbine von dem Sollwert dieser Temperatur wiedergebenden Faktor laufend aktualisiert wird. Die Brennstoffmenge für die Niederdruck-Brennkammer wird in Funktion des am Eintritt in die Niederdruckturbine herrschenden Druckes geführt, wobei das Verhältnis zwischen dieser Brennstoffmenge und dem Druck am Eintritt in die Niederdruckturbine durch einen die Abweichung der Eintrittstemperatur in die Niederdruckturbine vom Sollwert dieser Temperatur wiedergebenden Faktor ebenfalls laufend aktualisiert wird.

Der wesentliche Vorteil der Erfindung ist darin zu sehen, dass die gemessene bzw. errechnete Temperatur nicht mehr direkt als alleiniges Mass zur Regelung der Brennstoffmenge herangezogen wird, sondern es wird eine auf Druckunterlagerung funktionierende Regelung eingeführt, welche situativ auf das Verhältnis des Druckes zur Brennstoffmenge reagiert. Diese Unmittelbarkeit ist deshalb gegeben, als der Druck sofort auf eine Veränderung der Strömungsmasse reagiert.

Vorteilhafte und zweckmässige Weiterbildungen der erfindungsgemässen Aufgabenlösung sind in den weiteren abhängigen Ansprüchen gekennzeichnet.

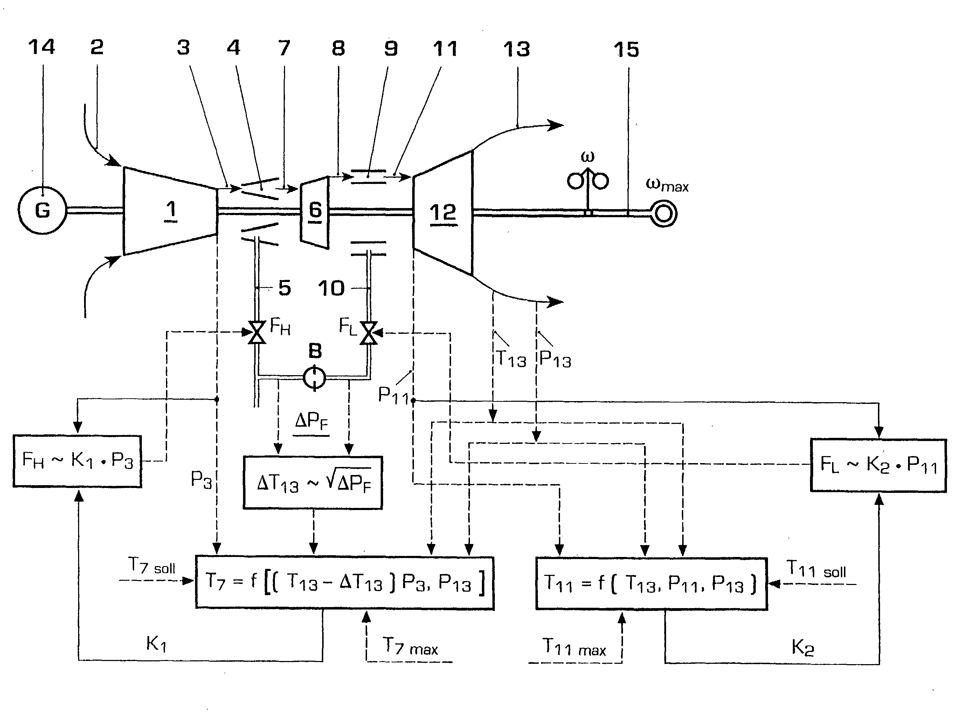

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung der Medien und Regelimpulse innerhalb des gezeigten Beispiels sind mit Pfeilen angegeben.

**Kurze Beschreibung der Zeichnung**

Die einzige Figur zeigt eine Gasturbogruppe mit einem integrierten Regelungsschema.

**Wege zur Ausführung der Erfindung, gewerbliche Verwendbarkeit**

Die Figur zeigt eine Gasturbogruppe, welche als Grundlage für die weiter oben zugrundegelegte Regelung dient. Diese Gasturbogruppe weist eine Verdichtereinheit 1 auf, in welcher die Kompression der angesaugten Luft 2 stattfindet. Die so verdichtete Luft 3 strömt sodann in eine erste Brennkammer, eine Hochdruck-Brennkammer 4 (HD-Brennkammer), in welcher die erste Bereitstellung von Heissgasen 7 durch einen zugeführten Brennstoff 5 stattfindet. Stromab dieser HD-Brennkammer 4 operiert eine erste Turbine 6, Hochdruckturbine (HD-Turbine), bei deren Durchströmung die in der HD-Brennkammer 4 bereitgestellten Heissgase 7 eine Teilentspannung erfahren. Diese Teilentspannung ist dadurch charakterisiert, dass die teilentspannten Heissgase 8 aus der HD-Turbine 6 noch eine relativ hohe Temperatur, in der Grössenordnung von 1000 Grad C und mehr, aufweisen. Dementsprechend besteht die genannte HD-Turbine 6 aus wenigen Laufschaufelreihen, vorzugsweise 1-3 Stufen. Stromab der HD-Turbine 6 wirkt eine zweite Brennkammer 9, Niederdruck-Brennkammer (ND-Brennkammer), welche nach einem Selbstzündungsprinzip funktioniert. In diesem Zusammenhang wird auf EP-0 620 362 A1 hingewiesen. Die ND-Brennkammer 9 hat im wesentlichen die Form eines durchströmten Ringkanals, in welchen vorzugsweise ein gasförmiger Brennstoff 10 eingedüst wird. Bei einer Temperatur der Abgase 8 aus der HD-Turbine auf obengenanntem Temperaturniveau findet in der ND-Brennkammer 9 eine Selbstzündung des eingedüsten Brennstoffes 10 statt. Diese ND-Brennkammer 9 weist hier nicht näher dargestellte Strömungshilfen auf, welche im Bereich der Flammenfront eine stabilisierende Rückströmzone zur Gewährleistung eines sicheren Brennbetriebes bewerkstelligen. Die teilentspannten Heissgase 8 werden demnach in der ND-Brennkammer 9 wieder zu vollwertigen-Heissgasen 11 aufbereitet, deren Temperatur in etwa derjenigen der HD-Brennkammer 4 entspricht. Grundsätzlich weisen die Temperaturen der Heissgase 7, 11 keine unmittelbare thermodynamische Grenze auf; diese Grenze wird vielmehr und vordergründig durch die zu beaufschlagenden Turbinen und deren Maschinenelemente vorgegeben. Diese Heissgase 11 beaufschlagen sodann eine zweite Turbine 12, Niederdruckturbine (ND-Turbine), in welcher zunächst die endgültige Entspannung stattfindet. Das kalorische Remanenz-Potential der Abgase 13 kann beispielsweise zur Dampferzeugung eines nachgeschalteten Dampfkreislaufes eingesetzt werden. Ein Generator 14 sorgt für die Stromerzeugung aus der Arbeitsleistung der beiden Turbinen 6, 12. Ein wesentliches Merkmal der gezeigten Gasturbogruppe ist die einheitliche Lagerung aller Strömungsmaschinen 1, 6, 12 auf einer durchgehenden Welle 15, welche vorzugsweise auf zwei nicht gezeigten Lagern abgestützt ist. Die beiden Brennkammern 4, 9 nehmen den intermediären Raum zwischen den beiden Turbinen 6, 12 ein, wobei die HD-Brennkammer 4 vorzugsweise als Ringbrennkammer ausgebildet ist, und weitgehend der Verdichtereinheit 1 übergelagert wird, dergestalt, dass dies wesentlich dazu beiträgt, die Gasturbogruppe zu einer kompakten Einheit werden zu lassen. Diese Möglichkeit lässt sich aus strömungstechnischen Ueberlegungen bezüglich der ND-Brennkammer 9 nicht ganz realisieren; immerhin ist hier zu sagen, dass die letztgenannte Brennkammer sehr kurz ausfällt, so dass das angestrebte Ziel, eine kompakte Gasturbogruppe zu realisieren, durchaus erreicht wird.

Die Gasturbogruppe wird während des Anfahrvorganges bis hin zum Betrieb mit halber Leistung lediglich durch Befeuerung der HD-Brennkammer betrieben. Anfänglich teilweise geschlossene Verdichterleitreihen werden sukzessiv geöffnet. Die Regelung der Brennstoffmenge 5 für die HD-Brennkammer 4 geschieht in herkömmlicher Weise in Funktion der Temperatur $T_{13}$ am Austritt der ND-Turbine 12 und des Verdichter-Enddruckes $P_3$ bzw. des Verdichter-Druckverhältnisses $\pi$ nach der Beziehung:

$$T_7 = A\,(T_{13} - \Delta T_{13}) + (B \cdot \pi) + C \qquad (1)$$

wobei A, B, und C die in üblicher Weise angepassten Korrekturglieder sind;
$T_7$ ist die Temperatur am Eintritt in die HD-Turbine, $T_{13}$ die Temperatur am Austritt der ND-Turbine, wobei $\Delta T_{13}$ vorläufig noch Null bleibt.
Für die weitere Belastung der Maschine wird nun die Brennstoffzufuhr 10 in die ND-Brennkammer 9 aktiviert, wobei deren Regelung durch eine zweite, herkömmliche Beziehung übernommen wird, nämlich

$$T_{11} = (A' \cdot T_{13}) + (B' \cdot \pi') + C' \qquad (2)$$

wobei $\pi' = P_{11}/P_{13}$ ist.
Der sich aus dem Betrieb der ND-Brennkammer 9 bei konstant gehaltener Brennstoffmenge 5 der ND-Brennkammer 4 ergebende Temperaturanstieg $\Delta T_{13}$ am Austritt aus der ND-Turbine 12 wird in die Beziehung (1) eingeführt, so dass die HD-Brennkammer 4 so geregelt wird, wie wenn die ND-Brennkammer 9 nicht in Betrieb wäre.
Die Richtigkeit des Wertes $\Delta T_{13}$ kann anlässlich eines jeden An- oder Abfahrvorganges im Sinne einer Eichung festgestellt werden. Er kann auch durch eine kleine Aenderung der Brennstoffmenge 10 der ND-Brennkammer 9 um $\Delta m_{FL}$ (Unterschied Massenstrom/Brennstoffmenge) jederzeit nachvollzogen werden. Diese Vorgehensweise setzt eine mindestens relative Messung der Brennstoffmenge 10 der ND-Brennkammer 9 voraus. Selbstverständlich kann $\Delta T_{13}$ auch rechnerisch simuliert werden.
Um ein besonders gutes regelungstechnisches Uebergangsverhalten zu erhalten, ist es von Vorteil, die beiden Brennstoffmengen der HD- und ND-Brennkammern mindestens durch eine Druckunterlagerung wie folgt zu führen.
Die Brennstoffmenge $F_H$ für die HD-Brennkammer 4 wird zunächst in Funktion des am Austritt des Verdichters 1 herrschenden Druckes $P_3$ geführt, wobei das Verhältnis zwischen dieser Brennstoffmenge $F_H$ und dem Verdichteraustrittsdruck $P_3$ durch einen die Abweichung der Temperatur $T_7$ am Eintritt in die HD- Turbine vom Sollwert dieser Temperatur $T_7$ wiedergebenden Faktor $K_1$ laufend aktualisiert wird. Die Brennstoffmenge $F_L$ für die ND-Brennkammer 9 wird in Funktion des am Eintritt in die ND-Turbine 12 herrschenden Druckes

$P_{11}$ geführt, wobei das Verhältnis zwischen dieser Brennstoffmenge $F_L$ und dem Druck $P_{11}$ am Eintritt in die ND-Turbine 12 durch einen die Abweichung der Eintrittstemperatur $T_{11}$ in die ND-Turbine 12 vom Sollwert dieser Temperatur $T_{11}$ wiedergebenden Faktor $K_2$ ebenfalls laufend aktualisiert wird.

Folgende Beziehungen gelten für die auf Druckunterlagerung geführte Regelung:

$$F_H \sim K_1 \cdot P_3 \qquad (3)$$

und

$$F_L \sim K_2 \cdot P_{11} \qquad (4)$$

Der dargestellte Temperatur-Regelungsmodus kann auch für eine Leistungs- und Drehzahl-Regelung verwendet werden, wobei dann die beiden $T_{max}$-Signale begrenzend auf die Brennstoffmengen 5, 10 einwirken. Im Falle der Drehzahlregelung ($\bar{\omega} = \bar{\omega}_{soll}$) wird im Normalfall nur die HD-Brennstoffmenge 5 bei gelöschter ND-Brennkammer 9 geregelt. Dies deshalb, weil grosse Maschinen praktisch nie für Inselbetrieb eingesetzt werden und die Drehzahlregelung lediglich für die Synchronisation gebraucht wird. Es ist aber auch möglich, nach Erreichen von $T_7 = T_{7soll}$ das $\bar{\omega}$-Signal auf die ND-Brennstoffmenge 10 weiter wirken zu lassen.

Umgekehrt könnte man die Leistungsregelung $P = P_{soll}$ nur auf die ND-Brennstoffmenge 10 wirken zu lassen, da selten unter Halblast gefahren wird. Es ist aber auch möglich, nach dem Löschen der ND-Brennkammer 9 das P-Signal auf die HD-Brennstoffmenge 5 hinüberzuleiten.

Anstelle der Abnahme der Drücke $P_3$ und $P_{11}$ bei schwieriger Prozessführung lässt sich für die Druckunterlagerung auch ein für den Massendurchsatz der Gasturbogruppe relevanter Druck verwenden, wobei die Interdependenz zwischen Massenstrom und Druck auch bei dieser Abnahme gewährleistet sein muss.

An sich kann bei bestimmten transienten Lastbereichen die Bestimmung der Temperatur $T_7$ am Eintritt in die HD-Turbine 6 durch die Temperatur $T_{13}$ - $\Delta T_{13}$ und durch das Druckverhältnis $P_3/P_{13}$ erfolgen, wobei die Temperaturdifferenz $\Delta T_{13}$ den durch die Zuschaltung der Wärmeleistung der ND-Brennkammer 9 entstehenden Anstieg der Temperatur $T_{13}$ darstellt, d.h. diese Temperaturdifferenz lässt sich ursächlich auch von der absoluten oder relativen Brennstoffmenge $F_L$ in die genannte ND-Brennkammer 9 in geeigneter Weise ableiten. Die Temperaturdifferenz $\Delta T_{13}$ lässt sich sodann aus den Drücken $P_{11}$ und $P_{13}$ und aus der Temperatur $T_{13}$ bestimmen, wobei dies möglich ist, wenn von einem vorgegebenen stabilen Temperaturwert $T_{11}$ ausgegangen oder diese über ein empirisches wiederholbares Verfahren ermittelt wird.

## Bezugszeichenliste

| | |
|---|---|
| 1 | Verdichtereinheit |
| 2. | Angesaugte Luft |
| 3 | Verdichtete Luft |
| 4 | HD-Brennkammer |
| 5 | HD-Brennstoffmenge |
| 6 | HD-Turbine |
| 7 | Heissgase |
| 8 | Abgase |
| 9 | ND-Brennkammer |
| 10 | ND-Brennstoffmenge |
| 11 | Heissgase |
| 12 | ND-Turbine |
| 13 | Abgase |
| 14 | Generator |
| 15 | Welle |
| $\bar{\omega}$ | Drehzahl |
| $\bar{\omega}_{max}$ | Maximale Drehzahl |
| $F_H$ | Brennstoff HD-Brennkammer |
| $F_L$ | Brennstoff ND-Brennkammer |
| $\Delta P_F$ | Druckdifferenz Blende |
| $P_3$ | Druck Verdichter-Austritt |
| $P_{11}$ | Druck Eintritt ND-Turbine |
| $P_{13}$ | Druck Austritt ND-Turbine |
| $T_7$ | Temperatur Eintritt HD-Turbine |
| $T_{11}$ | Temperatur Eintritt ND-Turbine |
| $T_{13}$ | Temperatur Austritt ND-Turbine |
| m | Brennstoffmenge |
| $K_1$ | Korrekturglieder |
| $K_2$ | Korrekturglieder |
| $\Delta_T$ | Temperaturdifferenz (Anstieg) |

## Patentansprüche

**1.** Verfahren zur Regelung eine Gasturbogruppe, im wesentlichen bestehend aus einer Verdichtereinheit (1), aus einer ersten der Verdichtereinheit (1) nachgeschalteten Brennkammer (4), einer der ersten Brennkammer (4) nachgeschalteten ersten Turbine (6), einer dieser ersten Turbine (6) nachgeschalteten, auf Selbstzündung operierenden zweiten Brennkammer (9), deren Heissgase (11) eine zweite Turbine (12) beaufschlagen und aus mindestens einem Generator (14), **dadurch gekennzeichnet, dass** eine zum Betrieb der ersten Brennkammer (4) notwendige Brennstoffmenge ($F_H$) zunächst in Funktion eines am Austritt des Verdichters (1) herrschenden Drucks ($p_3$) geführt wird, *und* das Verhältnis zwischen dieser Brennstoffmenge ($F_H$) und diesem Druck ($p_3$) *in an sich bekannter Weise* durch einen die Abweichung einer Temperatur ($T_7$) am Eintritt in die erste Turbine (6) *vom* Sollwert die-

ser Temperatur ($T_{7soll}$) wiedergebenden Faktor ($K_1$) laufend aktualisiert wird, eine zum Betrieb der zweiten Brennkammer (9) notwendige Brennstoffmenge ($F_L$) zunächst in Funktion eines am Eintritt in die zweite Turbine (12) herrschenden Drucks ($p_{11}$) geführt wird _und_ das Verhältnis zwischen dieser Brennstoffmenge ($F_L$) und diesem Druck ($p_{11}$) _in an sich bekannter Weise_ durch einen die Abweichung der Eintrittstemperatur ($T_{11}$) in die zweite Turbine (12) _vom_ Sollwert dieser Temperatur ($T_{11soll}$) wiedergebenden Faktor ($K_2$) ebenfalls laufend aktualisiert wird.

2. Verfahren nach Anspruch 1,
   **dadurch gekennzeichnet, dass**
   die Temperatur am Eintritt in die erste Turbine $T_7$ durch die Differenz aus einer Temperatur $T_{13}$ am Austritt der zweiten Turbine (12) und einer durch die Zuschaltung der Wärmeleistung der zweiten Brennkammer (9) entstehenden Temperaturdifferenz $\Delta T_{13}$ und durch das Verhältnis der Drücke $p_3/p_{13}$ bestimmt wird, wobei p13 der am Austritt der zweiten Turbine herrschende Druck ist.

3. Verfahren nach einem der Ansprüche 1 oder 2, **dadurch gekennzeichnet, dass**
   die Temperaturdifferenz $\Delta T_{13}$ von der absoluten oder der relativen Brennstoffmenge $F_L$ abgeleitet wird.

4. Verfahren nach einem der Ansprüche 1 oder 2,
   **dadurch gekennzeichnet, dass**
   die Temperaturdifferenz $\Delta T_{13}$ aus den Drücken p11 und p13 und aus der Temperatur T13 ausgehend von einer errechneten thermodynamisch optimalen Temperatur $T_{11}$ bestimmt wird.

**Claims**

1. Method for regulating a gas turbo-generator set, essentially consisting of a compressor unit (1), of a first combustion chamber (4) following the compressor unit (1), a first turbine (6) following the first combustion chamber (4), a second combustion chamber (9) which follows this first turbine (6) and operates by autoignition and the hot gases (11) of which act upon a second turbine (12), and at least one generator (14), **characterized in that** a fuel quantity ($F_H$) necessary for operating the first combustion chamber (4) is first controlled as a function of a pressure ($P_3$) prevailing at the outlet of the compressor (1), and the ratio between this fuel quantity ($F_H$) and this pressure ($P_3$) is continuously updated in a manner known per se by means of a factor ($K_1$) reproducing the deviation of a temperature ($T_7$) at the inlet into the first turbine (6) from the desired value of this temperature ($T_{7des}$), a fuel quantity ($F_L$)

necessary for operating the second combustion chamber (9) is controlled initially as a function of a pressure ($P_{11}$) prevailing at the inlet into the second turbine (12), and the ratio between this fuel quantity ($F_L$) and this pressure ($P_{11}$) is likewise continuously updated in a manner known per se by means of a factor ($K_2$) reproducing the deviation of the inlet temperature ($T_{11}$) into the second turbine (12) from the desired value of this temperature ($T_{11des}$).

2. Method according to Claim 1, **characterized in that** the temperature at the inlet into the first turbine ($T_7$) is determined by means of the difference between a temperature ($T_{13}$) at the outlet of the second turbine (12) and a temperature difference ($\Delta T_{13}$) occurring as a result of the cut-in of the heat capacity of the second combustion chamber (9) and by means of the ratio of the pressures $p_3/p_{13}$, p13 being the pressure prevailing at the outlet of the second turbine.

3. Method according to either of Claims 1 and 2, **characterized in that** the temperature difference ($\Delta T_{13}$) is derived from the absolute or relative fuel quantity ($F_L$).

4. Method according to either of Claims 1 and 2, **characterized in that** the temperature difference ($\Delta T_{13}$) is determined from the pressures $p_{11}$ and $p_{13}$ and from the temperature $T_{13}$, starting from a calculated thermodynamically optimum temperature $T_{11}$.

**Revendications**

1. Procédé de régulation d'un groupe générateur à turbine à gaz essentiellement constitué d'une unité de compresseur (1), d'une première chambre de combustion (4) située à en aval de l'unité de compresseur (1), d'une première turbine (6) située en aval de la première chambre de combustion (4), d'une deuxième chambre de combustion (9) qui opère par auto-allumage et qui est raccordée en aval de cette première turbine (6) et dont les gaz chauds (11) alimentent une deuxième turbine (12), et d'au moins un générateur (14), **caractérisé en ce que** le débit dé combustible ($F_H$) nécessaire pour le fonctionnement de la première chambre de combustion (4) est d'abord amené en fonction de la pression ($P_3$) qui règne à la sortie du compresseur (1), le rapport entre ce débit de combustible ($F_H$) et cette pression ($P_3$) étant actualisé en permanence de manière connue en soi par un facteur ($K_1$) qui donne l'écart entre la température ($T_7$) à l'entrée de la première turbine (6) et la valeur de consigne de cette température ($T_{7soll}$), le débit de combustible ($F_L$) nécessaire pour le fonctionnement de la deuxième chambre de combustion (9) étant d'abord amené en fonc-

tion de la pression ($P_{11}$) qui règne à l'entrée de la deuxième turbine (12), le rapport entre ce débit de combustible ($F_L$) et cette pression ($P_{11}$) étant également actualisé en permanence de manière connue en soi par un facteur ($K_2$) qui donne l'écart entre la température d'entrée ($T_{11}$) dans la deuxième turbine (12) et la valeur de consigne de cette température ($T_{11soll}$).

2. Procédé selon la revendication 1, **caractérisé en ce que** la température $T_7$ à l'entrée de la première turbine est déterminée à partir de la différence entre la température $T_{13}$ à la sortie de la deuxième turbine (12) et la différence de température $\Delta T_{13}$ qui résulte du branchement de la capacité calorifique de la deuxième chambre de combustion (9) et par le rapport entre les pressions $P_3/P_{13}$, $P_{13}$ étant la pression qui règne à la sortie de la deuxième turbine.

3. Procédé selon l'une des revendications 1 ou 2, **caractérisé en ce que** la différence de température $\Delta T_{13}$ est dérivée du débit absolu ou relatif de combustible $F_L$.

4. Procédé selon l'une des revendications 1 ou 2, **caractérisé en ce que** la différence de température $\Delta T_{13}$ est déterminée à partir des pressions $P_{11}$ et $P_{13}$ et de la température $T_{13}$ en partant d'une température thermodynamiquement optimale $T_{11}$ calculée.

EP 0 921 292 B1

14  2  3  4  7  8  9  11  13  15

G

1

6

12

ω

$\omega_{max}$

5  10

$F_H$  $F_L$

B

$\Delta P_F$

$T_{13}$  $P_{13}$

$P_{11}$

$F_H \sim K_1 \cdot P_3$

$\Delta T_{13} \sim \sqrt{\Delta P_F}$

$F_L \sim K_2 \cdot P_{11}$

$P_3$

$T_{7\,soll}$

$T_7 = f\left[\left(T_{13} - \Delta T_{13}\right) P_3,\ P_{13}\right]$

$T_{11\,soll}$

$T_{11} = f\left(T_{13},\ P_{11},\ P_{13}\right)$

$K_1$

$T_{7\,max}$

$T_{11\,max}$

$K_2$